Europäisches Patentamt

**European Patent Office**

Office européen des brevets

(19)

(11) Publication number: **0 037 174**

**A1**

(12) # EUROPEAN PATENT APPLICATION

(21) Application number: **81300856.2**

(22) Date of filing: **02.03.81**

(51) Int. Cl.³: **F 16 D 3/16**
**F 16 C 27/00, H 02 K 7/08**

(30) Priority: **21.03.80 GB 8009683**

(43) Date of publication of application:
**07.10.81 Bulletin 81/40**

(84) Designated Contracting States:
**CH DE FR GB IT LI**

(71) Applicant: **S.S.S. PATENTS LIMITED**
**Park Road**
**Sunbury-on-Thames Middlesex(GB)**

(72) Inventor: **Clements, Herbert Arthur**
**Berachah Shores Road**
**Woking(GB)**

(74) Representative: **Miller, Joseph et al,**
**J. MILLER & CO. Lincoln House 296-302 High Holborn**
**London WC1V 7JH(GB)**

(54) Power transmission shaft arrangement.

(57) First shaft means (12) and second shaft means (16) drivably connected to one another by a coupling (22) that will accept angular movements between the first and second shaft means (12,16), characterised in that the first shaft means (12) has at least one bearing (15) which is carried by a structure (14) which is mounted for pivotable movement about a centre (21) located substantially in a plane passing through said coupling (22).

./...

EP 0 037 174 A1

Croydon Printing Company Ltd.

*Fig .1.*

- 1 -

"POWER TRANSMISSION SHAFT ARRANGEMENT"

This invention concerns a power transmission shaft arrangement and, although the invention is not so restricted, it is more particularly concerned with a power transmission shaft arrangement for transmitting power from a gas turbine engine to an electric generator.

It is known to drive an electric generator from a gas turbine engine by way of a power transmission shaft arrangement, the gas turbine engine having a rotor shaft support bearing which moves vertically to a considerable extent whenever the gas turbine engine is brought into operation and thus changes from a cold to a hot condition. The power transmission shaft arrangement has to accommodate these vertical movements and this is particularly difficult to achieve if the power transmission shaft arrangement includes a synchronous self-shifting clutch. Thus when such a clutch is engaged, the clutch input and output teeth must be concentric with one another, and this is difficult to achieve by reason of the fact that the said vertical movements produce angular and other misalignment between the said teeth.

According therefore to the present invention there is provided a power transmission shaft arrangement comprising first shaft means and second shaft means drivably connected to one another by a coupling that will accept angular movements between the first and second shaft means, characterised in that the first shaft means has at least one bearing which is carried by a structure which is mounted for pivotable movement about a centre located substantially in a plane passing through said coupling.

Preferably there are means for urging the bearing or bearings towards a predetermined position.

The first shaft means may comprise a shaft which is directly driven by a heat engine, the position of said shaft depending upon whether the heat engine is operative or inoperative.

The said predetermined position is preferably the position when the heat engine is operative.

The second shaft means may comprise the shaft of an electric generator.

The coupling is preferably constituted by mutually engageable teeth of a synchronous self-shifting clutch.

The coupling may be a toothed coupling having input and output teeth which mesh substantially in said plane.

Alternatively the coupling may be a diaphragm coupling having a diaphragm member substantially in said plane.

There may be a second coupling disposed between shaft portions of the first shaft means, there being a second bearing carried by said structure, said second bearing being on the side of the second coupling opposite to the first-mentioned bearing or bearings, the second bearing supporting one of the said shaft portions.

The arrangement may be such that there is a second plane which passes through the second coupling and the second bearing, said second plane extending substantially normally of the first shafting.

Alternatively, there may be a second coupling disposed between shaft portions of the first shaft means, there being a second bearing between the second coupling and the first-mentioned bearing, the second bearing being carried by said structure. An additional bearing may also be provided on the opposite side of the second coupling to the second bearing.

The invention is illustrated, merely by way of example, in the accompanying drawings, in which:-

Figure 1 is a diagrammatic sketch of a first embodiment of a power transmission shaft arrangement according to the present invention,

Figure 2 is a diagrammatic sketch of a second embodiment of a power transmission shaft arrangement according to the present invention,

Figure 3 is a diagrammatic sketch of a third embodiment of a power transmission shaft arrangement according to the present invention, the parts being shown in their positions when a driving turbine is cold, and

Figure 4 is a view of the structure shown in Figure 3, but showing the position of the parts when the driving turbine is hot.

Terms such as "left", "right", "upward" and "downward", as used in the description below, are to be understood to refer to directions as seen in the accompanying drawings.

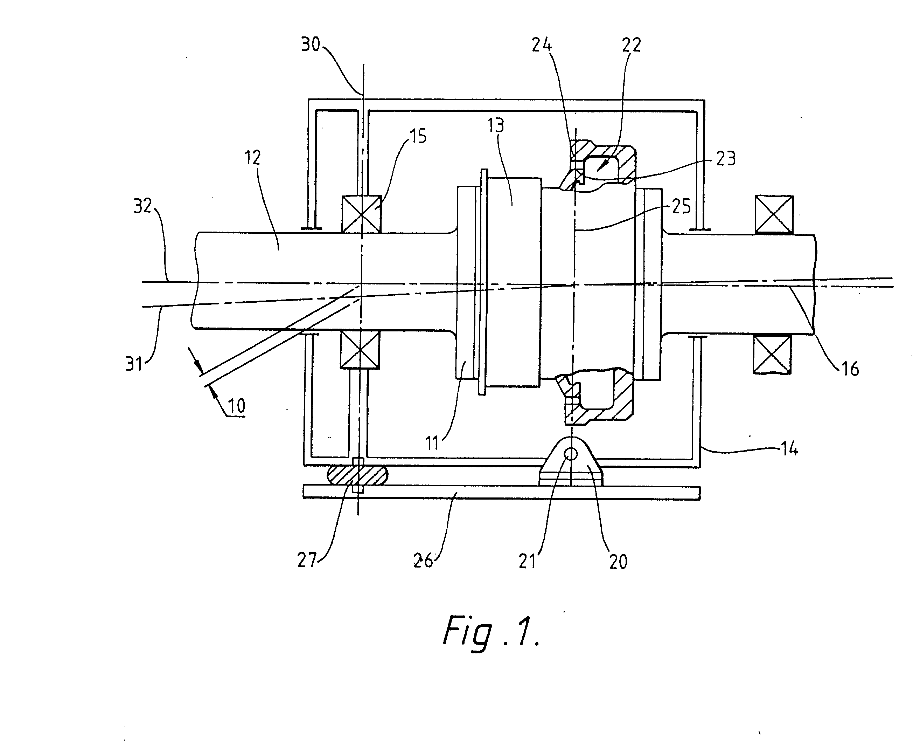

In Figure 1 there is shown a first embodiment of a power transmission shaft arrangement in which a turbine output shaft 12, which may for example be 2 metres long, extends directly from a gas turbine engine (not shown) to a flange 11 which is connected to a synchronous self-shifting (or other) clutch 13.

The clutch 13 is mounted within a clutch casing 14. Mounted within the clutch casing 14 is a support bearing 15 which supports the turbine output shaft 12. The clutch 13 is arranged to transmit drive to a generator shaft 16.

The clutch casing 14 is mounted on a trunnion support 20 so that the clutch casing 14 can pivot about a trunnion axis 21. The clutch 13 is provided with clutch input teeth 23 and clutch output teeth 24 for coupling together at a coupling 22 the turbine output shaft 12 to the generator shaft 16. The clutch teeth 23, 24 will accept angular movements of the turbine output shaft 12 with respect to the generator shaft 16, the clutch teeth 23, 24 meshing substantially in a plane 25 in which lies the trunnion axis 21.

The trunnion support 20 is carried by a frame member 26 between which and the clutch casing 14 there is disposed an oil-damped flexible support 27 for urging the clutch casing 14 upwardly. The flexible support 27 should, as shown, preferably be vertically aligned with and disposed beneath the support bearing 15 so that the centre-line 30 of the latter also passes centrally through the flexible support 27.

When the gas turbine engine (not shown) is cold, the centre-line of the turbine output shaft 12 is disposed in the position indicated by the line 31. When, however, the gas turbine is fully operative and hot, the centre-line of the turbine output shaft is in the position indicated at 32. The flexible support 27 is designed to have a stiffness determined by the extent of movement 10 of the turbine output shaft 12 between the cold and hot positions 31, 32, and the load on the support bearing 15 in these two positions.

The support bearing 15 serves both to support the turbine output shaft 12 and to support input and sliding components of the clutch 13. The provision of the flexible support 27 under the support bearing 15 ensures that the turbine output shaft 12 can move between the "cold" and "hot" positions without applying excessive side forces to the clutch input and output teeth 23, 24.

In operation, when the gas turbine engine is cold, the turbine output shaft 12 is bent upwardly as indicated at 31. This causes

0037174

- 5 -

a high load to be imposed on the support bearing 15 in a downward direction so as to cause the flexible support 27 to be compressed. As the gas turbine engine is brought into operation and becomes hotter, however, the turbine output shaft 12 moves upwardly towards the position indicated at 32 and the load is reduced on the support bearing 15.  At the same time, the flexible support 27 maintains the support bearing 15 in a position in which the teeth 23, 24 are suitably aligned.  This is possible by reason of the fact that the clutch casing 14 which carries the support bearing 15 is mounted for pivotal movement about the centre constituted by the trunnion axis 21, which centre is located substantially in the plane 25 which passes through the meshed clutch teeth 23, 24.  Thus the support bearing 15 will be placed in the correct position to ensure that the clutch teeth 23, 24 are only subjected to angular movement even though the turbine output shaft 12 moves from the position 31 to the position 32.

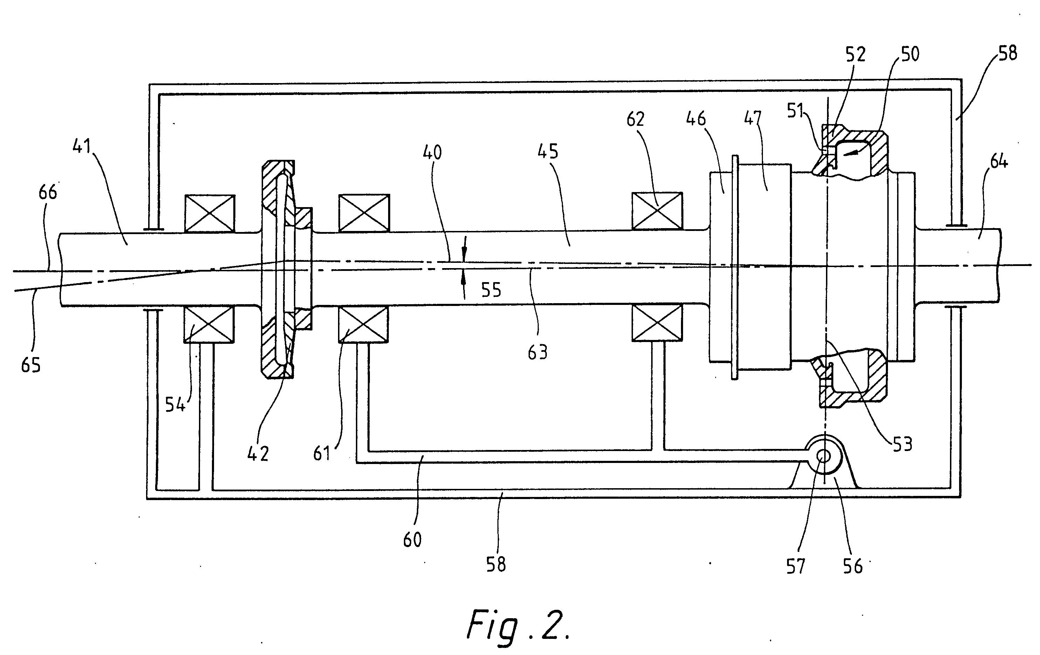

Referring now to the second embodiment of the present invention which is shown in Figure 2, a gas turbine engine (not shown) drives a turbine output shaft 41 which extends directly from the engine. The turbine output shaft 41, which may be 2 metres long, is bolted to the input side of a diaphragm coupling 42.  The output from the diaphragm coupling 42 is connected to a clutch input shaft 45.  If desired, the diaphragm coupling 42 may be replaced by a toothed coupling.

The clutch input shaft 45 is connected to a clutch input flange 46 of a synchronous self-shifting clutch 47.  The clutch 47 has input teeth 51 and output teeth 52 which provide a coupling 50 and which mesh substantially in a plane 53.

The right hand end of the turbine output shaft 41 is supported by a bearing 54.  The latter is supported within a casing 58 within which are mounted the diaphragm coupling 42, the clutch input shaft 45 and the clutch 47. Mounted in the casing 58 is a trunnion support 56 to which there is pivotally secured at a trunnion axis 57 a frame 60. The trunnion axis 57 lies substantially in the plane 53. The frame 60 supports a clutch input shaft support bearing 62 and a bearing 61. The bearings 61, 62 are respectively disposed adjacent to the coupling 42 and to the clutch 47.

The clutch input shaft support bearing 62 is provided primarily to support the clutch input shaft 45 when the clutch 47 is disengaged.

The clutch 47 drives a generator shaft 64 which is supported in its own bearings (not shown).

The turbine output shaft 41, when the gas turbine engine is cold, adopts the position indicated at 65, which results in the clutch input shaft 45 adopting a position 40, whereas when the gas turbine engine is fully operative and hot, the turbine output shaft 41 adopts the position indicated at 66, which results in the clutch input shaft 45 adopting a position 63. The angular movement between the positions 40 and 66 is indicated at 55. The engaged clutch teeth 51, 52 will accept the angular movement 55 of the clutch input shaft 45 with respect to the generator shaft 64.

The provision of the bearing 61, which is connected to the frame 60, is to ensure that the frame 60 will follow the movement of the clutch input shaft 45 and will place the support bearing 62 in the correct position to ensure that the clutch teeth 51, 52 are only subjected to angular movement even though the turbine output shaft 41 moves from the position 65 to the position 66 when warming up, resulting in movement of the clutch input shaft 45 from position 40 to position 63. The clutch teeth 51, 52 are subjected to reduced angular movement as compared with the clutch teeth 23, 24 in the first embodiment.

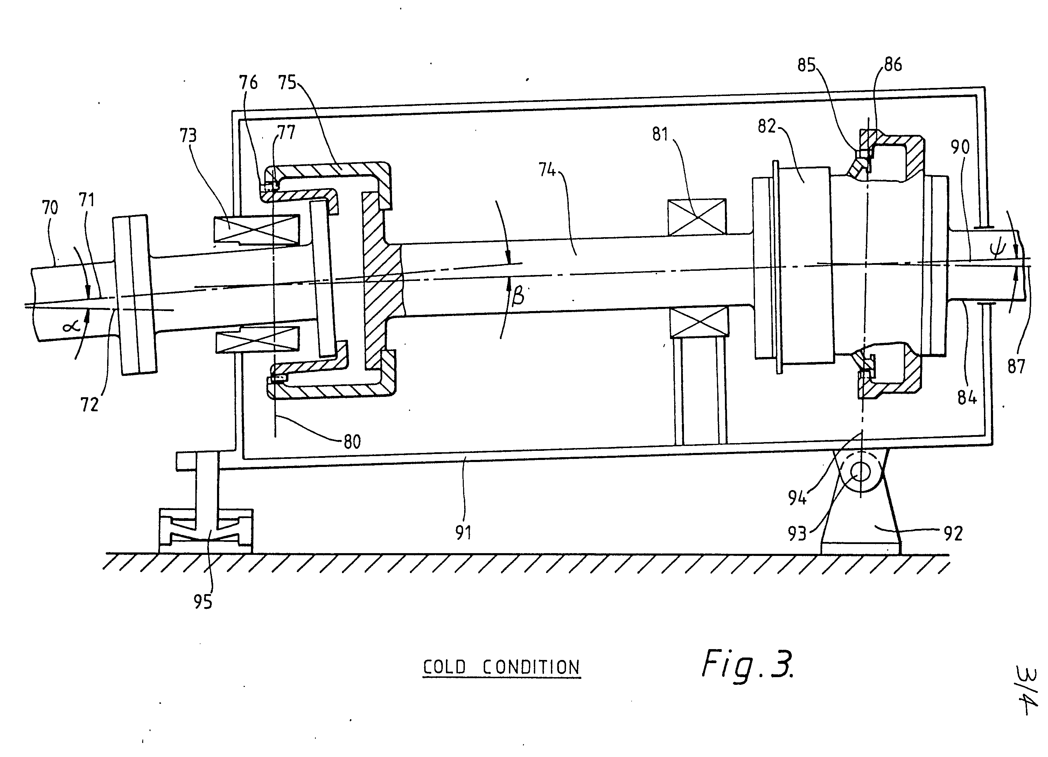

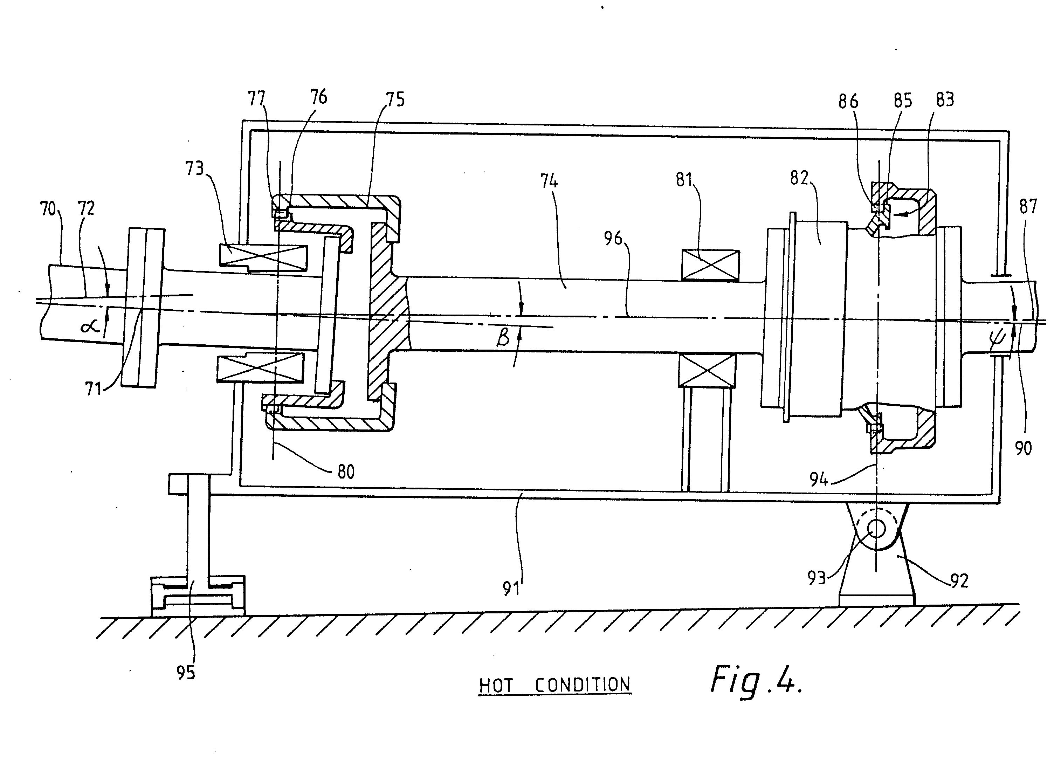

In Figures 3 and 4 there is shown a third embodiment of a power transmission shaft arrangement according to the present invention. Referring to these figures, a turbine output shaft 70 extends directly from a gas turbine engine and may have a length of 2 metres. When the gas turbine engine is in the cold condition, the centre-line of the turbine output shaft 70 is disposed as indicated at 71 and thus at an angle $\alpha$ to the theoretically correct position 72 of the centre-line.

The right hand end of the turbine output shaft 70 is supported by a support bearing 73, power being transmitted from the right hand end of the turbine output shaft 70 to a clutch input shaft 74 by way of a flexible toothed coupling 75 which will accept angular movements between the shafts 70, 74.

The coupling 75 comprises input teeth 76 and output teeth 77, there being a common plane 80 which extends substantially normally of the shafts 70, 74, and which passes through the meshing teeth 76, 77 and through the support bearing 73. As a result of the provision of the coupling 75, the upward inclination of the clutch input shaft 74 is reduced to an angle $\beta$ which is less than the inclination of the angle $\alpha$.

The clutch input shaft 74 is supported by a support bearing 81, the right hand end of the clutch input shaft 74 supporting a synchronous self-shifting clutch 82. The support bearings 73, 81 are thus disposed on opposite sides of the coupling 75. The clutch 82, when engaged, transmits drive to a generator shaft 84 supported in a pair of bearings (not shown). The clutch 82 is provided with input and output teeth 85, 86 respectively which constitute a coupling 83. As will be seen from Figure 3, in the cold condition the centre-line 87 of the generator shaft 84 is at an angle $\psi$ to the centre-line 90 of the clutch 82, and the angle $\psi$ is preferably equal to the angle $\alpha$. The arrangement is thus such that the centre-line 87 of the generator shaft 84 is in its correct position in the cold condition. Thus the provision of the coupling teeth 76, 77 and clutch teeth 85, 86 enable the upwardly inclined turbine output shaft 70 to drive the horizontally disposed generator shaft 84, each of the coupling and clutch teeth reducing the original inclination by half.

The support bearings 73, 81 are carried by a common frame 91, which is itself mounted on a trunnion support 92 for pivotal movement about the trunnion axis 93. The trunnion axis 93 lies in a plane 94 which passes through the meshing teeth 85, 86 of the clutch 82.

The frame 91 is urged resiliently upwardly by a flexible spring or diaphragm support 95, and any movement of the latter is preferably damped by a fluid such as oil.

It could be arranged that the teeth 76, 77 accommodated all the angular movement between the turbine output shaft 70 and the generator shaft 84, so relieving the clutch teeth 85, 86 of the clutch 82 from being subject to any angular movement whatever. This is not considered to be desirable, however, since it would then be difficult to ensure high reliability of the coupling 75. Consequently, as indicated above, the angular movement between the shafts 70, 84 is in effect shared between the coupling teeth 76, 77 and clutch teeth 85, 86.

When the gas turbine engine is cold, the support bearing 73 is heavily loaded downwards. However, the provision of the flexible support 95 enables the bearing 73 to move downwardly to the position shown in Figure 3. This position of the support bearing 73 is arranged so that the angular movement to which the teeth 76, 77 of the coupling 75 is subjected is approximately equal to the angular movement of the teeth 85, 86 of the clutch 82. As the gas turbine engine becomes hot, the load on the support bearing 73 is relieved so that the spring support 95 moves the turbine output shaft 70 upwardly to the position shown in Figure 4. It is arranged that, during this movement, the coupling teeth 76, 77 and clutch teeth 85, 86 are subjected to equal reductions in slope until both coupling teeth 76, 77 and clutch teeth 85, 86 move through the zero slope condition, after which the slope reverses to the opposite direction, as shown in Figure 4. Thus, as indicated in Figure 4, in the "hot" condition, the centre-line 71 of the turbine output shaft 70 is inclined downwardly at a slope of $\alpha$ relative to the generator shaft centreline 87, while the centre-line 96 of the clutch input shaft 74 slopes downwardly at $\beta$ which is approximately half the value of $\alpha$.

Where toothed couplings have been shown in Figures 1, 2, 3 and 4 it would be possible, if desired, that any or all of these couplings could be constituted by diaphragm couplings, or any other type of coupling that would accept angular movements. Moreover, the diaphragm coupling 42 could be constituted by a tooth coupling.

The description above has reference to an arrangement in which the movements are vertical movements, but the present invention could be applied to a power transmission shaft arrangement in which the movements are horizontal movements. Moreover, there can if desired be a combination of vertical and horizontal movements in which case a knuckle joint would be provided instead of a hinged joint.

CLAIMS

1.    A power transmission shaft arrangement comprising first shaft means (12) and second shaft means (16) drivably connected to one another by a coupling (22) that will accept angular movements between the first and second shaft means (12,16), characterised in that the first shaft means (12) has at least one bearing (15) which is carried by a structure (14) which is mounted for pivotable movement about a centre (21) located substantially in a plane passing through said coupling (22).

2.    An arrangement as claimed in claim 1 characterised in that there are means (27) for urging the said bearing or bearings (15) towards a predetermined position.

3.    An arrangement as claimed in claim 1 or 2 characterised in that the first shaft means comprises a shaft (12) which is directly driven by a heat engine, the position of said shaft (12) depending upon whether the heat engine is operative or inoperative.

4.    An arrangement as claimed in claim 2 and in claim 3 characterised in that the said predetermined position is the position when the heat engine is operative.

5.    An arrangement as claimed in any preceding claim characterised in that the second shaft means comprises the shaft (16) of an electric generator.

6.    An arrangement as claimed in any preceding claim characterised in that the coupling (22) is constituted by mutually engageable teeth (23,24) of a synchronous self-shifting clutch (13)

7.    An arrangement as claimed in any preceding claim characterised in that the coupling is a toothed coupling (22) having input and output teeth (23,24) which mesh substantially in said plane.

8.    An arrangement as claimed in any of claims 1-5 characterised in that the coupling is a diaphragm coupling having a diaphragm member substantially in said plane.

9.    An arrangement as claimed in any preceding claim characterised in that there is a second coupling (75) disposed between shaft portions (70,74) of the first shaft means, there being a second said bearing (73) carried by said structure (91), said second bearing (73) being on the side of the second coupling (75) opposite to the first-mentioned bearing or bearings (81), the second bearing (73) supporting one of the said shaft portions (70).

10.    An arrangement as claimed in claim 9 characterised in that there is a second plane (80) which passes through the second coupling (75) and the second bearing (73), said second plane (80) extending substantially normally of the first shaft means.

11.    An arrangement as claimed in any of claims 1-8 characterised in that there is a second coupling (42) disposed between shaft portions (41,45) of the first shaft means, there being a second bearing (61) between the second coupling (42) and the first-mentioned bearing (62), the second bearing (61) being carried by said structure (60).

*Fig .1.*

Fig.2.

0037174

2/4

COLD CONDITION

Fig. 3.

HOT CONDITION    Fig.4.

0037174

4/4

0037174

## EUROPEAN SEARCH REPORT

European Patent Office

Application number

EP 81 30 0856

### DOCUMENTS CONSIDERED TO BE RELEVANT

| Category | Citation of document with indication, where appropriate, of relevant passages | Relevant to claim |
|---|---|---|
| X | <u>US - A - 3 926 012</u> (BIERMANN)<br><br>* Columns 1 and 2; figures * | 1 |
| | <u>GB - A - 292 875</u> (ROZIERES)<br><br>* Pages 1 and 2; figures * | 1,2 |
| X | <u>US - A - 2 721 458</u> (BOUCHARD)<br><br>* column 2, lines 58-66; figure 3 * | 1 |
| | <u>FR - A - 2 424 143</u> (SPICER)<br><br>* Page 3; figure 2 * | 1,7 |
| | <u>FR - A - 2 135 767</u> (CAIL)<br><br>* Page 2; figures * | 1 |
| | <u>US - A - 3 433 338</u> (CLEMENTS)<br><br>* Column 2; figures * | 1,6,8 |
| | <u>US - A - 2 988 686</u> (SCHNITTINGER)<br><br>* Columns 1,2 and 3; figures * | 3,5,6 |
| | <u>FR - A - 2 446 957</u> (COSTAMASNAGA)<br><br>* Page 2; figures * | 1,7 |

### CLASSIFICATION OF THE APPLICATION (Int. Cl.³)

F 16 D   3/16
F 16 C  27/00
H 02 K   7/08

### TECHNICAL FIELDS SEARCHED (Int. Cl.³)

F 16 C  23/00
F 16 C  27/00
F 16 D   3/00
F 16 D  23/00
H 02 K   7/00
F 01 D  15/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 29.06.1981 | FLORES |

EPO Form 1503.1   06.78